# EUROPÄISCHE PATENTSCHRIFT

(11) **EP 2 995 988 B1**
(45) Veröffentlichungstag und Bekanntmachung des Hinweises auf die Patenterteilung: **08.02.2017**
(21) Anmeldenummer: 15002567.4
(22) Anmeldetag: 01.09.2015
(51) Int. Cl.: G02C 1/04

(54) **BRILLE UND BEFESTIGUNGSVERFAHREN EINES BRILLENGLASES**
SPECTACLES AND METHOD OF SECURING A SPECTACLE LENS
LUNETTES ET PROCEDE DE FIXATION D'UN VERRE DE LUNETTE

(30) Priorität: 10.09.2014 DE 102014113046
(43) Veröffentlichungstag der Anmeldung: 16.03.2016
(73) Patentinhaber: Temming Holding GmbH, 33334 Gütersloh (DE)
(72) Erfinder: Temming, Markus, 33334 Gütersloh (DE)
(74) Vertreter: Rolf, Gudrun, LL.M

(56) Entgegenhaltungen:
- EP-A1- 2 228 679
- WO-A1-00/26717
- WO-A1-97/23803
- FR-A- 1 277 375
- US-A1- 2001 017 686
- US-A1- 2005 007 546

## Beschreibung

Die Erfindung betrifft eine Brille und ein Befestigungsverfahren eines Brillenglases in einem Brillengestell der Brille gemäß den Oberbegriffen der Ansprüche 1 und 6.

Es ist eine Brille aus Brillengläsern und einem Brillengestell mit einer Halterung für ein Brillenglas aus einem dieses mindestens teilweise umschlingenden Faden mit einer endseitigen Verdickung als formschlüssige Auszugsverriegelung bekannt, EP 0 978 749 B1, bei der ein Fadenende durch eine Durchtrittsöffnung mit dem Durchmesser des Fadens durch ein Brillenglas hindurchgeführt und endseitig mit einer Verdickung versehen ist, woraufhin der Faden um das Brillengestellt herumgewunden und dadurch das Glas daran festlegt ist.

Nachteilig an dieser vorbekannten Brille ist, dass in das Brillenglas eine Bohrung eingebracht werden muss und zudem, dass das verdickte Ende des Fadens teilweise vor dem Brillenglas endet, sodass diese Art der Glasbefestigung nicht nur technisch aufwendig ist, sondern optische und mechanische Nachteile mit sich bringt.

Bei einer weiteren bekannten Brille, DE 200 02 863 U1, mit einem das Brillenglas an einem Gestell fixierenden Kunststofffaden, ist am Brillengestell ein Doppelhohlröhrchen angeordnet, welches von dem Kunststofffaden unter einem vollständigen Richtungswechsel durchsetzt ist, sodass bei dieser Brillenkonstruktion ein erhöhter Fertigungsaufwand zur Herstellung und Anordnung der Doppelhohlröhrchen am Brillengestell sowie bei der Montage der Brillengläser erforderlich ist.

Bekannt ist auch eine Vorrichtung zur Befestigung von Linsen in einem Brillengestell, DE 696 11 045 T2, mit einem Kunststofffaden, der an seinen Enden mit Schlaufen versehen ist, die anschließend ein aus dünnem Metalldraht ausgebildetes Brillengestell umschlingen, wobei hier die Länge des Kunststofffadens durch die Schlaufen fix vorgegeben ist, sodass für unterschiedliche Brillengestelle und Brillengläser eine Vielzahl verschieden langer Fäden vorgehalten werden müssen, was aufwändig und unwirtschaftlich ist.

Bekannt ist zudem eine Brille, DE 299 19 039 U1, mit durch einen Kunststofffaden fixierten Brillengläsern, wobei dieser Kunststofffaden mittels Klemmschrauben in Klemmzylindern in Durchgangsbohrungen eines Brillengestelles gehalten wird, sodass zwar keine Fäden mit vorherbestimmten Längen vorgehalten werden müssen, die technische Ausführung der Glasbefestigung jedoch technisch unnötig kompliziert ausgeführt ist.

Eine weitere bekannte Brille, WO 00/26717 A1, weist einen perlenkettenförmigen Haltefaden mit Einschnürungen zwischen aufeinanderfolgenden Kettenkörpern auf, die seitlich in Schlitzausnehmungen im Brillengestell eingezogen und elastisch verformt werden, wobei der Haltefaden und die schlüssellochförmigen Schlitzausnehmungen nur höchst aufwändig herstellbar sind und auch keine stufenlose Einspannung des Haltefadens möglich ist.

Bei einer aus der FR1 277 375 A1 bekannten Glasbefestigung einer Brille wird ein Faden von einer ausgestanzten Federzunge gegen eine Anschlagfläche gedrückt, wobei diese Fadenhalterung fertigungstechnisch ebenfalls sehr aufwändig in einer extra dafür an dem Brillengestell angeformten Fläche hergestellt werden muss.

Aufgabe der Erfindung ist es, eine Brille und ein Befestigungsverfahren eines Brillenglases im Brillengestell dieser Brille mittels eines Fadens zur Verfügung zu stellen, die sehr einfach und wirtschaftlich sind und ohne das Einbringen von Bohrungen mit Durchmessern der Fadendicke in ein Gestell oder ein Glas und ohne Verwendung von Klemmschrauben für den Faden und ohne das Erfordernis des Vorhaltens von Fäden vorherbestimmter Länge auskommen.

Die Lösung dieser Aufgabe ergibt sich in Verbindung mit den Merkmalen der Oberbegriffe der Ansprüche 1 und 6 zusammen mit den technischen Merkmalen deren kennzeichnender Teile.

Die Brille besteht dabei aus zwei Brillengläsern und einem Brillengestell mit einer Halterung für die Brillengläser aus jeweils einem ein Brillenglas oder beide Brillengläser mindestens teilweise umschließenden Faden mit einer Auszugsverriegelung aus einem ortsfesten Sitz im Brillengestell, wobei dieses im Kontaktbereich von Faden und Brillengestell einen schlitzartigen Klemmsitz als kraft- und reibschlüssige Auszugsverriegelung für den Faden aufweist, in der dieser mehrseitig eingeklemmt gehalten ist und das freie Ende des Fadens abgelängt ist. Bei einer solchen seitlichen oder radialen Klemmung wird zusätzlich eine elastische und/ oder plastische Verformung des Fadens auftreten, die einen Teil des Haltevermögens der Auszugsverriegelung liefert.

Hierdurch wird auf einfachste Art und Weise ermöglicht, das Ende eines Fadens in einem schlitzartigen Klemmsitz des Brillengestells festzulegen und gegen ein Herausziehen aus dem Schlitz zu sichern. Der Faden muss zur Festlegung im Brillengestell also weder durch ein dünnes Loch mit dem Durchmesser der Fadendicke hindurchgefädelt werden, noch muss er in einer Buchse durch eine seitliche Klemmschraube fixiert werden, sodass die Brillenglasbefestigung so gut wie ohne die Verwendung zusätzlicher technischer Hilfsmittel auskommt, wobei der Faden mindestens teilweise um ein Brillenglas herum gelegt und anschließend per Hand in den schlitzartigen Klemmsitz gezogen werden kann, ohne vorher auf eine festgelegte Länge abgelängt werden zu müssen, sodass beispielsweise ein Faden von einer Spule verwendet werden kann, der je nach Anforderung an die Länge nach einer durchgeführten Glasbefestigung, etwa mit einem Messer oder einer Schere abgelängt werden kann, sodass ein Verschnitt an Fadenstücken vollständig vermieden werden kann.

Das Brillengestell besteht im Ganzen, zumindest aber im Kontaktbereich mit dem Faden, aus einem formstabilen federelastischen dünnen Metalldraht, etwa aus Titan, und der schlitzartige Klemmsitz aus einer V-förmigen Biegeverformung dieses Metalldrahtes mit einem sich zu deren Spitze verengenden Spalt mit einem geringeren Maß der Spaltweite als dem Maß des Durchmessers des Fadens, sodass sich beim Einziehen des Fadens in den Klemmsitz sofort eine mechanische Arretierung des Fadens einstellt.

Der Metalldraht könnte bei einer anderen vorteilhaften Ausführungsform der Erfindung auch eine U-förmige Biegeverformung aufweisen, mit einem so engen parallelen Spalt, dass der Faden nur durch ein geringfügiges elastisches Aufweiten des Spaltes in diesen eingeführt werden kann und anschließend ebenfalls kraftschlüssig darin gehalten wird.

Diese Biegeverformung des Metalldrahtes führt zu einem höchst einfachen sowie wirtschaftlich herstellbaren aber sehr wirkungsvollen schlitzartigen Klemmsitz und zu einer simplen und doch sehr widerstandsfähigen Festlegung eines Brillenglases in einem Brillengestell, ohne darin oder in Brillengläser Bohrungen einbringen oder feinmechanische Werkzeuge benutzen zu müssen.

Vorteilhafte Ausgestaltungen des Gegenstandes der Erfindung ergeben sich mit und in Kombination aus den nachfolgenden Unteransprüchen insbesondere dadurch, dass die Brille eine weitere endseitige Auszugsverriegelung für den Faden aufweist, die als formschlüssige Auszugsverriegelung ausgebildet ist, wobei der Faden aus einem thermoplastischen Kunststoffmaterial wie Nylon besteht, sodass die endseitige Verdickung des abgelängten freien Fadenendes mittels einer thermischen Verformung erzeugt werden kann, was die Herstellung der erfindungsgemäßen Brille weiter vereinfacht, da diese Fadenendperle einfach mittels einer kleinen Flamme oder einem Lötkolben hergestellt werden kann.

Dadurch, dass das Brillengestell im Bereich des Klemmsitzes etwa in einer Ebene mit dem Brillenglas und dem um einen Teil des Brillenglases geführten und auf den Klemmsitz zulaufenden Faden liegt, der auf das Brillengestell aufläuft und in dem schlitzartigen Klemmsitz winklig, etwa rechtwinklig, umgelenkt ist, werden zudem weitere Variationsmöglichkeiten der Befestigung eines Brillenglases in einem Brillengestell zur Verfügung gestellt, indem ein Faden in Durchsichtrichtung durch eine Brille entweder von außen nach innen, von innen nach außen oder aber auch von innen in einer seitlichen Richtung durch einen entsprechend geformten Klemmsitz verlaufen kann.

Andere Brillengestelle können ebenfalls mit dieser Art von Glasbefestigung versehen sein, indem sie im Kontaktbereich mit dem Faden ebenfalls eine V-förmige, nach oben offene oder geschlossene Ausnehmung mit größerem Innenmaß als dem Dickenmaß des Fadens aufweisen, mit einem sich verengenden Spalt mit einem mindestens in einem Teilbereich des Spaltes geringeren Maß der Spaltbreite als dem Maß des Durchmessers des Fadens, sodass auch hier ein Brillenglas nach dem gleichen Prinzip festgelegt werden kann.

Entsprechend einer vorteilhaften Ausführungsform der Erfindung sind beide Enden eines Fadens in jeweils einem solchen Klemmsitz festgelegt, wobei ein Faden entweder gleichzeitig zwei Brillengläser oder aber nur eines mindestens teilweise umschlingt, sodass dann zur Befestigung von zwei Brillengläsern zwei Fäden erforderlich sind und das Brillengestell anstatt mit zwei dann mit vier Klemmsitzen ausgestattet sein würde.

Die Brille und das Befestigungsverfahren eines Brillenglases in einem Brillengestell einer solchen Brille werden nachfolgend anhand von Zeichnungen näher beschrieben. Es zeigen:

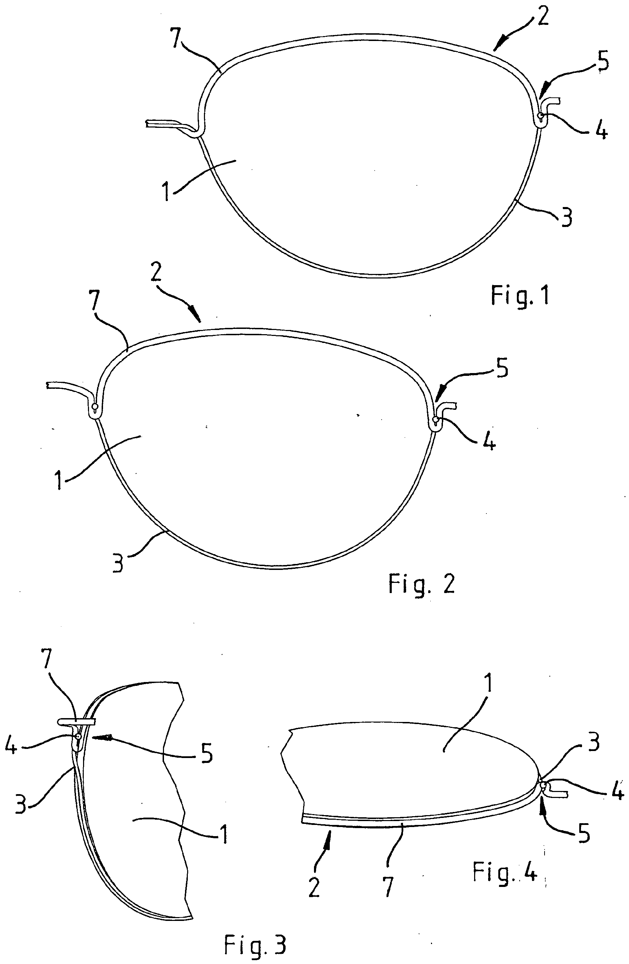

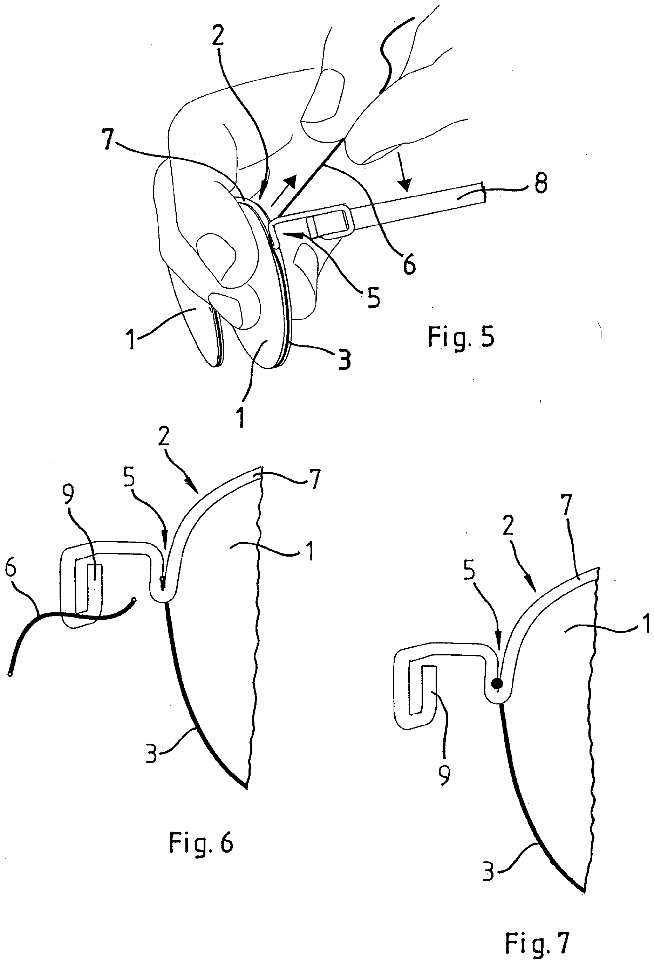

## Patentansprüche

1. Brille aus Brillengläsern (1) und einem Brillengestell (2) mit einer Halterung für ein Brillenglas (1) aus einem das Brillenglas (1) mindestens teilweise umschließenden Faden (3) mit einer endseitigen Auszugsverriegelung aus einem ortsfesten Sitz, **dadurch gekennzeichnet, dass** das Brillengestell (2) im Kontaktbereich von Faden (3) und Brillengestell (2) mit einer kraft- und reibschlüssigen Auszugsverriegelung aus einem schlitzartigen Klemmsitz (5) für den Faden (3) ausgestattet ist, in dem dieser Faden (3) mehrseitig eingeklemmt gehalten und ein freies Endes (6) des Fadens (3) hinter dem Klemmsitz (5) abgelängt ist und dass das Brillengestell (2) zumindest im Kontaktbereich mit dem Faden (3) aus einem formstabilen federelastischen Metalldraht (7) besteht und der schlitzartige Klemmsitz (5) aus einer V- oder U-förmigen Biegeverformung des Metalldrahtes (7) geformt ist, mit einem entweder sich verengenden oder parallelen, elastisch aufweitbaren Spalt mit mindestens abschnittsweise einem geringeren Maß der Spaltbreite als dem Maß des Durchmessers des Fadens (3).

2. Brille nach Anspruch 1, **dadurch gekennzeichnet, dass** sie eine weitere endseitige Auszugsverriegelung des Fadens (3) aufweist, die als formschlüssige Auszugsverriegelung ausgebildet ist und aus einer endseitigen Verdickung (4) des abgelängten freien Fadenendes besteht, die mittels einer thermischen Verformung des aus einem thermoplastischen Kunststoff bestehenden Fadens (3) gebildet ist.

3. Brille nach einem der vorgenannten Ansprüche, **dadurch gekennzeichnet, dass** das Brillengestell (2) im Kontaktbereich mit dem Klemmsitz (5) in einer Ebene mit einem Brillenglas (1) und dem um einen Teil des Brillenglases (1) geführten und auf den Klemmsitz (5) zulaufenden Faden (3) verläuft, der auf das Brillengestell (2) aufläuft und in dem schlitzartigen Klemmsitz (5) winklig umgelenkt ist.

4. Brille nach einem der vorgenannten Ansprüchen, **dadurch gekennzeichnet, dass** das Brillengestell (2) mit V-förmigem Klemmsitz (5) im Kontaktbereich mit dem Faden (3) eine V-förmige, nach oben offene oder geschlossene Ausnehmung mit größerem Innenmaß als dem Dickenmaß des Fadens (3) und einem sich verengenden Spalt mit einem geringeren Maß der Spaltbreite als dem Maß des Durchmessers des Fadens (3) aufweist.

5. Brille nach einem der vorgenannten Ansprüche, **dadurch gekennzeichnet, dass** die beiden Enden eines Fadens (3) jeweils in einem separaten Klemmsitz (5) festgelegt sind und ein Faden (3) ein oder gleichzeitig zwei Brillengläser (1) mindestens teilweise umschlingt und das Brillengestell (2) mit zwei oder vier Klemmsitzen (5) ausgestattet ist.

6. Befestigungsverfahren eines Brillenglases (1) in einem Brillengestell (2) gemäß einem der vorgenannten Ansprüche, **dadurch gekennzeichnet, dass** das Brillenglas (1) an das Brillengestell (2) angesetzt und in Position gehalten wird, ein einseitig am Brillengestell (2) oder im Brillenglas (1) festgelegter Faden (3) mindestens teilweise um das Brillenglas (1) herum bis in den Kontaktbereich von Faden (3) und Brillengestell (2) geführt und in den schlitzartigen Klemmsitz (5) eingelegt wird, woraufhin der Faden (3) gespannt und winklig umgelenkt in den Klemmsitz (5) hineingezogen wird, wo er durch Klemmkräfte gehalten wird, woraufhin das freie Ende (6) des Fadens (3) abgelängt wird.

7. Befestigungsverfahren nach Anspruch 6, **dadurch gekennzeichnet, dass** die Klemmkräfte in dem schlitzartigen Klemmsitz (5) durch dessen V-Form reib- und kraftschlüssig und die Kompression des Fadens (3) und/ oder durch elastische Rückstellkräfte des beim Einziehen des Fadens (3) in den schlitzartigen Klemmsitz (5) leicht aufgeweiteten Klemmsitz (5) erzeugt werden.

8. Befestigungsverfahren nach Anspruch 6, **dadurch gekennzeichnet, dass** das Ende des Fadens (3) nach dem Ablängen erwärmt wird, bis das eine Verdickung (4) des Fadens (3) entsteht, die den Faden (3) zusätzlich formschlüssig gegen ein Herausziehen aus dem Klemmsitz (5) sichert.

## Claims

1. Spectacles consisting of spectacle lenses (1) and of a spectacle mount (2), with a retainer for a spectacle lens (1) composed of a filament (3) which at least partially encloses the spectacle lens (1) and has an end-side anti-extraction lock preventing extraction from a fixed seat, **characterized in that** the spectacle mount (2), in the contact area of filament (3) and spectacle mount (2), is equipped with a positive and friction-fit anti-extraction lock preventing extraction from a slit-like clamp fit (5) for the filament (3), in which this filament (3) is held clamped on more than one side, and a free end (6) of the filament (3) is cut off behind the clamp fit (5), and **in that** the spectacle mount (2), at least in the contact area to the filament (3), is made of a dimensionally stable, resilient metal wire (7), and the slit-like clamp fit (5) is formed from a V-shaped or U-shaped bending deformation of the metal wire (7), with a gap which either narrows or is parallel and elastically expandable and has at least in part a smaller dimension of the gap width than the dimension of the diameter of the filament (3).

2. Spectacles according to Claim 1, **characterized in that** they have a further end-side anti-extraction lock for the filament (3), which lock is designed as a form-fit anti-extraction lock and consists of an end-side thickening (4) of the cut free end of the filament, which thickening (4) is formed by means of thermal deformation of the filament (3) made of a thermoplastic.

3. Spectacles according to one of the preceding claims, **characterized in that** the spectacle mount (2), in the contact area with the clamp fit (5), extends in a plane with a spectacle lens (1) and the filament (3) guided around a part of the spectacle lens (1) and tapering to the clamp fit (5), which filament (3) runs onto the spectacle mount (2) and is deflected at an angle in the slit-like clamp fit (5).

4. Spectacles according to one of the preceding claims, **characterized in that** the spectacle mount (2), with V-shaped clamp fit (5) in the contact area to the filament (3), has a V-shaped, upwardly open or closed recess of a greater internal dimension than the thickness of the filament (3) and with a narrowing gap of smaller dimension of the gap width than the dimension of the diameter of the filament (3).

5. Spectacles according to one of the preceding claims, **characterized in that** the two ends of a filament (3) are each fastened in a separate clamp fit (5), and a filament (3) at least partially loops around one spectacle lens (1), or simultaneously two spectacle lenses (1), and the spectacle mount (2) is equipped with two or four clamp fits (5).

6. Securing method for securing a spectacle lens (1) in a spectacle mount (2) according to one of the preceding claims, **characterized in that** the spectacle lens (1) is placed onto the spectacle mount (2) and is held in position, a filament (3) fastened at one end on the spectacle mount (2) or in the spectacle lens (1) is guided at least partially around the spectacle lens (1) into the contact area of filament (3) and spectacle mount (2) and is fitted into the slit-like clamp fit (5), whereupon the filament (3), tensioned and deflected at an angle, is pulled into the clamp fit (5), where it is held by clamping forces, whereupon the free end (6) of the filament (3) is cut to length.

7. Securing method according to Claim 6, **characterized in that** the clamping forces in the slit-like clamp fit (5) are generated frictionally and positively by its V shape and the compression of the filament (3) and/or by elastic restoring forces of the clamp fit (5) that is slightly widened as the filament (3) is pulled into the slit-like clamp fit (5).

8. Securing method according to Claim 6, **characterized in that**, after being cut to length, the end of the filament (3) is heated until the one thickening (4) of the filament (3) is obtained, which thickening (4) additionally secures the filament (3) with a form fit against being pulled out from the clamp fit (5).

## Revendications

1. Lunettes composées de verres de lunettes (1) et d'une monture de lunettes (2) avec une fixation pour un verre de lunettes (1) composée d'un fil (3) entourant au moins en partie le verre de lunettes (1) avec un verrouillage par traction du côté d'extrémité composé d'un siège fixe sur place, **caractérisées en ce que** la monture de lunettes (2) est équipée, dans la zone de contact du fil (3) et de la monture de lunettes (2), d'un verrouillage par traction réalisé par complémentarité de forces et de frottements composé d'un siège de coincement (5) de type fente pour le fil (3) dans lequel ce fil (3) est maintenu de façon à être pincé sur plusieurs côtés et une extrémité libre (6) du fil (3) étant coupée en longueur derrière le siège de coincement (5) et que la monture de lunettes (2) se compose, au moins dans la zone de contact avec le fil (3), d'un fil métallique (7) élastique à ressort à forme stable et que le siège de coincement (5) de type fente est formé d'une déformation en flexion en forme de V ou de U du fil métallique (7), avec une fente parallèle pouvant soit s'élargir de façon élastique soit se rétrécir, avec au moins par endroits une dimension plus réduite de la largeur de fente que la dimension du diamètre du fil (3).

2. Lunettes selon la revendication 1, **caractérisées en ce qu'**elles comportent un verrouillage par traction du fil (3) supplémentaire du côté d'extrémité réalisé sous la forme d'un verrouillage par traction par complémentarité de formes et composé d'un épaississement (4) du côté d'extrémité de l'extrémité de fil libre coupée en longueur, ledit épaississement étant formé au moyen d'une déformation thermique du fil (3) composé d'une matière plastique thermoplastique.

3. Lunettes selon l'une quelconque des revendications précédentes, **caractérisées en ce que** la monture de lunettes (2) s'étend dans la zone de contact avec le siège de coincement (5) dans un plan avec un verre de lunettes (1) et le fil (3) guidé autour d'une partie du verre de lunettes (1) et se terminant sur le siège de coincement (5), ledit fil passant sur la monture de lunettes (2) et étant dévié selon un certain angle dans un siège de coincement (5) de type fente.

4. Lunettes selon l'une quelconque des revendications précédentes, **caractérisées en ce que** la monture de lunettes (2) comporte, avec le siège de coincement (5) en forme de V dans la zone de contact avec le fil (3), un évidement fermé ou ouvert vers le haut en forme de V avec une dimension intérieure plus grande que la dimension d'épaisseur du fil (3) et avec une fente se rétrécissant avec une dimension plus réduite de largeur de fente que la dimension du diamètre du fil (3).

5. Lunettes selon l'une quelconque des revendications précédentes, **caractérisées en ce que** les deux extrémités d'un fil (3) sont respectivement fixées dans un siège de coincement (5) séparé et qu'un fil (3) enroule au moins en partie un ou simultanément deux verres de lunettes (1) et que la monture de lunettes (2) est équipée de deux ou quatre sièges de coincement (5).

6. Procédé de fixation d'un verre de lunettes (1) dans une monture de lunettes (2) selon l'une quelconque des revendications précédentes, **caractérisé en ce que** le verre de lunettes (1) est placé contre la monture de lunettes (2) et maintenu en place, un fil (3) fixé unilatéralement contre la monture de lunettes (2) ou dans le verre de lunettes (1) étant guidé au moins en partie autour du verre de lunettes (1) jusque dans la zone de contact du fil (3) et de la monture de lunettes (2) et étant inséré dans le siège de coincement (5) de type fente, puis le fil (3) étant serré et dévié selon un certain angle dans le siège de coincement (5) où il est maintenu grâce à des forces de coincement, à la suite de quoi l'extrémité libre (6) du fil (3) est coupée en longueur.

7. Procédé de fixation selon la revendication 6, **caractérisé en ce que** les forces de coincement sont produites dans le siège de coincement (5) de type fente du fait de sa forme en V, par complémentarité de frottements et de forces et par la compression du fil (3) et/ou par le biais de forces de rappel élastiques du siège de coincement (5) légèrement élargi lors de l'introduction du fil (3) dans le siège de coincement (5) de type fente.

8. Procédé de fixation selon la revendication 6, **caractérisé en ce que** l'extrémité du fil (3) est réchauffée après le raccourcissement de la longueur, jusqu'à obtention d'un épaississement (4) du fil (3) fixant le fil (3) davantage par complémentarité de formes en vue d'empêcher un retrait hors du siège de coincement (5).
